Europäisches Patentamt

(19) European Patent Office

Office européen des brevets

(11) Publication number: **0 069 179**
**A1**

## (12) EUROPEAN PATENT APPLICATION

(21) Application number: **81303126.7**

(22) Date of filing: **08.07.81**

(51) Int. Cl.³: **F 24 J 3/02**

(43) Date of publication of application:
**12.01.83 Bulletin 83/2**

(84) Designated Contracting States:
**AT BE CH DE FR GB IT LI LU NL SE**

(71) Applicant: SUNCOAST SOLAR SYSTEMS PTY LIMITED
9 Dryden Avenue
Carlingford New South Wales 2118(AU)

(72) Inventor: Ware, John Raymond
9 Dryden Avenue
Carlingford New South Wales 2118(AU)

(74) Representative: Pratt, David Martin et al,
Brookes & Martin High Holborn House 52/54 High
Holborn
London. WC1V 6SE(GB)

(54) Solar absorber panel.

(57) A solar energy absorption panel (10) having a plurality of conduits (15) through which water passes to be heated by energy collected by the panel (10), the panel (10) including an inlet (12) and outlet duct (13A; 13B) between which extends a plurality of extruded plastic strips (11) defining said conduits (15).

FIG.1

EP 0 069 179 A1

- 1 -

<u>"SOLAR ABSORBER PANEL"</u>

The present invention relates to devices to absorb solar radiation for the purposes of heating water, and more particularly but not exclusively for the purpose of heating water for swimming pools.

Convenentionally, solar panels or elements used for heating swimming pools consist of an extruded plastic strip which is provided with a series of longitudinally-extending passages,. usually four. More particularly, the passages are joined by a median web. The strips are formed of generally circular conduits joined by a web, accordingly, the majority of conduits and web are spaced from the roof surfaces supporting them. However, it is generally an object of these known strips to heat the water passing therethrough by means of direct absorption of solar radiation and accordingly absorption of heat by conduction has not been considered. Accordingly, the absorber panel or strip is not in good thermal contact with the roof structure and accordingly it is not efficient in absorbing heat from the roof by means of conduction.

It is an object of the present invention to overcome or substantially ameliorate the above disadvantages.

There is disclosed herein a strip of extruded plastics material having a plurality of longitudinally extending passages through which a fluid is to be passed to be heated by solar energy absorbed by the strip, the strip comprising a plurality of longitudinally-extending conduits defining said passages, a respective web joining each pair of adjacent conduits, and a flat surface adjacent each conduit, which flat surfaces lie generally within a common plane so that in use the surfaces abut a roof supporting the strip so as to receive heat from the roof by conduction.

A preferred form of the present invention will now be described by way of example with reference to the accompanying drawings, wherein:

Figure 1 schematically depicts a solar radiation absorption system for heating a swinning pool;

Figure 2 is a schematic cross-section, taken on the line 2-2 of Figure 1, of an absorber element of the system of Figure 1; and

Figure 3 is a cross-section of an alternative form of solar absorber element for use with the absorption system of Figure 1.

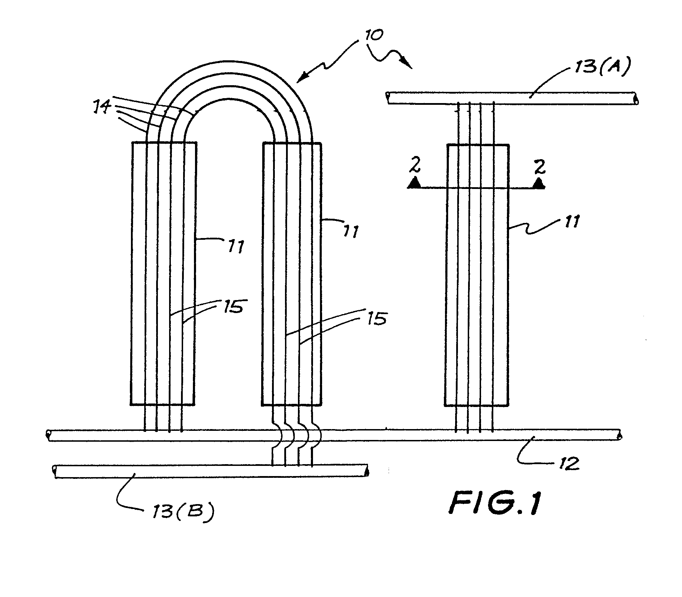

Referring to the drawings, Figure 1 shows a water heating system 10 which directly absorbs solar radiation to heat water for a swimming pool. Additionally, heat is absorbed from the roof surface by way of conduction. The system 10 includes one or more solar radiation panels 11 which are formed of an extruded plastics material. Each element 11 has a plurality of longitudinally-extending passages 15, preferably four, through which water passes to be heated by the element 11. The element 11 has its passages 15 in communication with an inlet manifold 12 and an outlet manifold 13A or 13B.

In Figure 1 there are two systems schematically depicted, one includes at least two elements 11 joined by loop conduits 14. In that particular embodiment, the inlet and outlet manifolds may be located in a lower gutter;

while the other system has the outlet manifold 13A located, for example, underneath the roof capping.

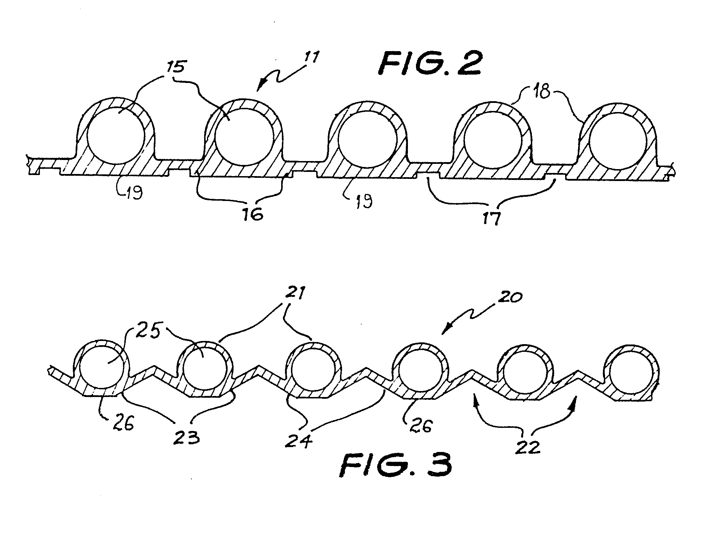

Now with particular reference to Figure 2, the cross-section of the element 11 shows that it consists of a plurality of generally circular conduits 18 which define passages 15. The conduits 18 are joined by webs 16 which are formed integral with the conduits 18 and extend generally tangential thereto. Additionally, the webs 16 have flat surfaces 19 which are provided to abut the roof surface so as to receive heat therefrom by conduction. The webs 16 are provided with longitudinally-extending grooves 17 which provide the elements 11 with a certain amount of flexibility, thereby facilitating its easy instalment.

Now with particular reference to Figure 3, the element 20 may be used to replace the element 11 in the systems of Figure 1. The element 20 includes a plurality of generally circular conduits 21 which define passages 25. The conduits 21 are joined by webs 22 consisting of two inclined parts 23 and 24. It should be appreciated that the inclined parts 23 and 24 are constructed so as to not cast a shadow over the passages 21. More particularly, the inclined parts 23 and 24 extend along tangents extending between adjacent passages 21. Additionally, flat surfaces 26 are provided to improve contact with the roof.

It should be appreciated that the centre lines of the conduits 18 lie within a common plane, while the surfaces 19 lie in a different plane parallel to the plane of the centre lines of the conduits 18. The same relationship exists for the conduits 21 and surfaces 22.

- 1 -

CLAIMS

1.   A strip of extruded plastics material having a plurality of longitudinally-extending passages through which a fluid is to be passed to be heated by solar energy absorbed by the strip, the strip comprising a plurality of longitudinally-extending conduits defining said passages, a respective web joining each pair of adjacent conduits, and a flat surface adjacent each conduit, which flat surfaces lie generally within a common plane so that, in use, the surfaces abut a roof supporting the strip so as to receive heat from the roof by conduction.

2.   A strip as claimed in claim 1, wherein each web is provided with a longitudinal groove to enable bending of the strip about a longitudinal axis.

3.   A strip as claimed in claim 1, wherein each web is of a generally "V"-shaped transverse cross-section so as to have two inclined parts which are generally tangential to said conduits.

4.   A solar absorber panel having an inlet duct and an outlet duct joined by a plurality of strips, each constructed in accordance with any one of claims 1 to 3.

FIG.1

0069179

FIG. 2

FIG. 3

**European Patent Office**

## EUROPEAN SEARCH REPORT

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| X | <u>GB - A - 2 059 049</u> (MYSON GROUP LTD.)  <br> * complete document * <br> -- | 1,2 | F 24 J 3/02 |
| X | <u>EP - A1 - 0 014 192</u> (J. IMHOF) <br> * page 5, paragraphs 2, 3; page 10, paragraph 2; page 11, paragraph 3; page 17, paragraph 3; fig. 2, 8 * <br> -- | 1 <br><br>. | |
| A | <u>DE - A1 - 2 809 908</u> (PHOENIX AG) <br> * page 3, paragraph 3; page 4, paragraph 1; fig. 1 * <br> ---- | 4 | TECHNICAL FIELDS SEARCHED (Int.Cl. 3) <br><br> F 24 J 3/00 |

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document. but published on. or after the filing date
D: document cited in the application
L: document cited for other reasons

&. member of the same patent family, corresponding document

X | The present search report has been drawn up for all claims

| Place of search | Date of completion of the search | Examiner |
|---|---|---|
| Berlin | 19-02-1982 | KRABEL |

EPO Form 1503.1   06.78